## Europäisches Patentamt

(19) **European Patent Office**

**Office européen des brevets**

(11) Publication number: **0 181 095**
**B1**

(12) **EUROPEAN PATENT SPECIFICATION**

(45) Date of publication of the patent specification:
**24.08.88**

(51) Int. Cl.⁴: **C 10 G 11/18**

(21) Application number: **85307241.1**

(22) Date of filing: **10.10.85**

(54) FCC closed cyclone process and apparatus.

(30) Priority: **01.11.84 US 667519**

(43) Date of publication of application:
**14.05.86 Bulletin 86/20**

(45) Publication of the grant of the patent:
**24.08.88 Bulletin 88/34**

(84) Designated Contracting States:
**BE DE FR GB IT NL**

(56) References cited:
**AU - A - 542 646**
**DE - A - 3 028 293**
**US - A - 4 070 159**

(73) Proprietor: **MOBIL OIL CORPORATION, 150 East 42nd Street, New York New York 10017 (US)**

(72) Inventor: **Haddad, James Henry, 45 Van Wyck Drive, Princeton Junction New Jersey 08550 (US)**
Inventor: **Owen, Hartley, 5 Riverview Terrace, Belle Mead New Jersey 08502 (US)**

(74) Representative: **Cooper, John Anthony et al, Mobil Court 3 Clements Inn, London WC2A 2EB (GB)**

## Description

This invention relates to a method and apparatus for the separation of a catalyst phase from a gas suspension phase in a fluidized catalytic cracking (FCC) unit.

The field of catalytic cracking, particularly fluid catalytic cracking, has undergone significant development improvements due primarily to advances in catalyst technology and product distribution obtained thereform. With the advent of high activity catalysts, and particularly crystalline zeolite cracking catalysts, new areas of operating technology have been encountered requiring refinements in processing techniques to take advantage of the high catalyst activity, selectivity and operating sensitivity.

The catalyst usually employed in an FCC installation is preferably a high activity crystalline zeolite catalyst of a fluidizable particle size. The catalyst is transferred in dispersed phase condition with a hydrocarbon feed generally upwardly through one or more riser reactors. The hydrocarbon residence time is 0.5 to 10 seconds, usually less than 8 seconds. High temperature riser cracking at temperatures over 540°C and at 0.5 to 4 seconds hydrocarbon residence time are desirable for some operations.

Rapid separation of catalyst from hydrocarbons discharged from a riser conversion zone is desirable for restricting hydrocarbon conversion. During cracking the catalyst entrains hydrocarbon vapors. The entrained hydrocarbons remain in contact with the catalyst until removed, usually by gas in a catalyst stripping zone. Cracked products and hydrocarbons stripped from the catalyst are combined and passed to a product fractionation step. Stripped catalyst containing deactivating amounts of carbonaceous material, or coke, is passed to a catalyst regenerator.

Cyclones are typically used for efficient separation of FCC catalyst from gas. It is possible to connect a number of cyclone separators in series directly to the output of the riser, with the gaseous output of the last cyclone conducting cracked hydrocarbons out of the reactor vessel. The passage of virtually all the cracked product through the primary cyclone requires a big primary cyclone.

US-A 4 070 159 discloses an apparatus for use in fluid catalytic cracking in which solid dispersoids in the gas stream are removed or collected. The apparatus comprises a conduit transporting the fluid gas/solids stream into a gravity settling chamber the bulk of the discharged catalyst particles are directed into the settling chamber optionally via a deflector cone directly above the conduit. The gas phase containing only residual amounts of entrained solids is simultaneously diverted through a cyclonic separator, the inlet of which is in open communication with the transport conduit via a sidewise port upstream of but near the downstream outlet end of the transport conduit.

US Patent No. 4 404 095 to Haddad et al, is shown in Fig. 1. This patent discloses an FCC reactor comprising a riser 10 with radially extending sidearms 12 as the first catalyst-hydrocarbon separator. The sidearms 12 force the suspension of the catalyst and hydrocarbons to change direction of flow, from the vertical to the horizontal direction, when striking end 14. The catalyst particles fall out of sidearm openings 16 in a downward direction, to a stripper 18 which includes baffles 20. The hydrocarbons, with some entrained catalyst particles, proceed through passages 22 into the inlets 24 of cyclones 26. The sidearms 12 and the cyclones 26 are enclosed by a vertical conduit 28 to minimize thermal cracking of the hydrocarbons, which would ordinarily be present for a long time in the reactor 30. Catalyst separated in cyclones 26 passes through diplegs 32 to the bottom of the reactor and conduit 34. Hydrocarbons pass through the cyclone exhaust 36 into plenum 38 and out conduit 40 to a fractionator (not shown).

All the catalyst and hydrocarbons exiting riser 10 pass through sidearms 12, requiring that they be sized to accommodate such a flow. During operation, substantial radial and longitudinal thermal expansion is encountered in the connecting conduits and intakes, and radially extending sidearms which necessitate some thermal accommodation.

It would be beneficial if a better design was available.

Accordingly, the present invention provides a process for fluidized catalytic cracking of a hydrocarbon feed by passing a fluidized mixture feed and a catalyst up through a riser reactor within a vessel and cracking the feed in the riser, cracked products are produced and discharged from the riser separated from catalyst in a cyclone and cracked products are removed from the vessel, characterized by passing the mixture of cracked hydrocarbons and catalyst adjacent at least one riser cyclone inlet, located in said riser, towards an inlet of at least one elongated catalyst conduit, said cyclone inlet flow and said catalyst conduit inlet flows making angles with respect to flow in the riser; recovering a minor portion of catalyst from cracked product in said riser cyclone and passing a major portion of catalyst and a minor portion of cracked product through said catalyst conduit.

In another embodiment, the present invention provides an apparatus for fluid catalytic cracking of a hydrocarbon feed, comprising a vessel containing at least a portion of a riser reactor formed as a vertically disposed elongated tubular conduit having an upstream end and a downstream end, the downstream end terminating within vessel; a hydrocarbon feed and catalyst inlet at the upstream end of the riser reactor to produce a mixture of catalyst and cracked hydrocarbon feed traveling towards the downstream end of the riser reactor; a catalyst conduit, having an inlet communicating with the downstream end of the riser reactor and an outlet communicating with the vessel; a riser cyclone separator, having an inlet adjacent the catalyst conduit inlet, an effluent exhaust and a catalyst exhaust, the inlet in fluid communication with the catalyst conduit; a conduit connective with the cyclone exhaust and extending out of the reactor vessel; and a conduit connective with the catalyst exhaust and the reactor vessel.

Fig. 1 is the prior art FCC system illustrated in Fig. 2 of U.S. Patent No. 4 404 095 issued to Hadded et al;

Fig. 2 is a side cross-sectional view of a first embodiment of the invention using vertical plane separation;

Fig. 3 is a top view of the embodiment shown in Fig. 2;

Fig. 4 is a side cross-sectional view of a second embodiment where the cyclone is supported from the riser;

Fig. 5 is a side cross-sectional view of a third embodiment where the cyclone separator is supported from the reactor vessel;

Fig. 6 is a perspective view of a fourth embodiment where horizontal plane separation is used;

Fig. 7 is a top view of a dual cyclone/dual catalyst conduit assembly using horizontal plane separation;

Fig. 8 is a perspective view of a fifth embodiment with horizontal plane separation and a cyclone supported from the reactor.

In the drawings, like numerals represent like elements in different figures.

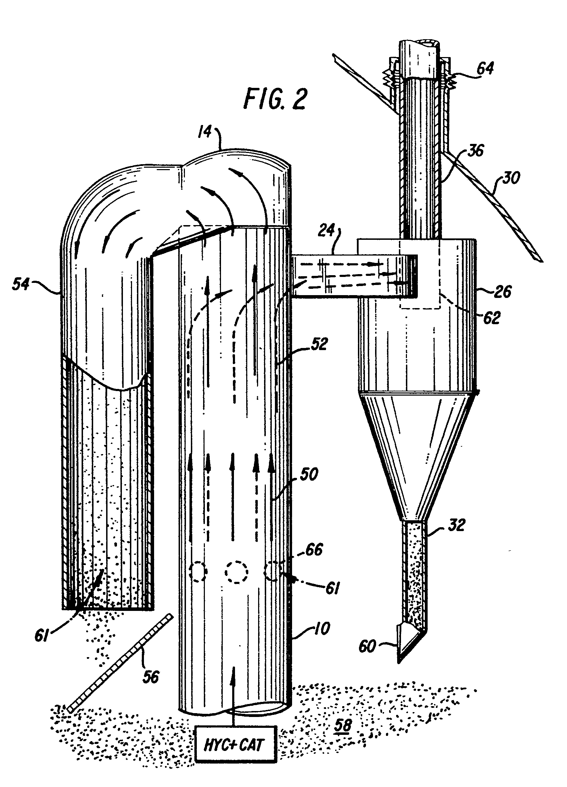

Fig. 2 illustrates a portion of a 2 cyclone/2 catalyst conduit system modified with a vertical plane catalyst particle separation system.

A hydrocarbon feed and catalyst mixture (HYC + CAT) travels through a riser reactor 10. Near the top of riser 10, the mixture of catalyst, represented by solid arrows 50, and gas or hydrocarbons, represented by dotted arrows 52, passes by cyclone inlet 24 at 15 to 25 m/sec (50–80 feet per second). Lower pressure in riser cyclone 26 allows the gaseous hydrocarbon materials to be drawn off from the vertically ascending hydrocarbon feed into inlet 24 of cyclone 26. Inlet 24 has a flow direction making an angle with respect to the mixture flow direction.

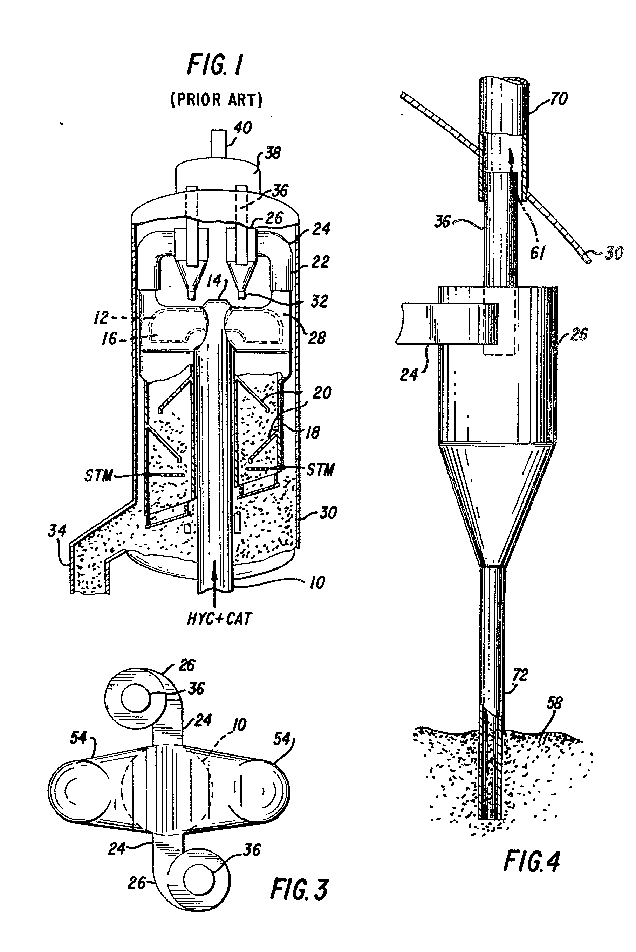

The inertia of catalyst in the mixture causes catalyst to continue vertically up, until loss of momentum and/or collisions with end cap 14 and other particles causes the catalyst to fall into catalyst conduit 54. The majority of catalyst particles follow the route indicated by solid line arrows 50 and fall through the catalyst conduit 54 to strike deflector plate 56 and enter the dense bed of catalyst 58 in the lower portion of the reactor vessel. As in the prior art, Fig. 1, the dense bed catalyst may pass through a catalyst stripper, with baffles and stripping steam. This stripping steam, and stripped hydrocarbons, indicated by dot/dash arrow 61, travel up conduit 54 into the inlet 24 of riser cyclone 26.

Some catalyst is carried along with the cracked hydrocarbon product into inlet 24. Cyclone 26 recovers a portion of the catalyst before the cracked products leave the reactor.

Prior art separators have inlet and outlet velocities of 15 to 21 mls (50–70 feet/s). In the present invention, because most catalyst bypasses the cyclone inlet, entrance velocities in cyclone inlet 24 may be 27 to 37 m/s (90 to 120 feet/s) and exhaust velocities in outlet 36 may be 27 to 67 m/s (90 to 220 feet/s). This higher velocity (due to reduced amounts of catalyst particles) allows a smaller separator dimension and a greater separator efficiency. Catalyst recovered in cyclone separator 26 settles into dipleg 32. Trickle valve 60 permits this to return to dense bed 58. The base 62 of the cyclone exhaust 36 extends below cyclone inlet 24, promoting the separation of catalyst from cracked hydrocarbons entering cyclone 26.

In the embodiment shown in Fig. 2, cyclone 26 and catalyst conduit 54 are supported on riser 10. During start-up, shut-down and normal operation of the system, substantial temperature differentials exist between the riser 10 and reactor vessel 30, creating thermal expansion differences between the two structures. These differences are accommodated with expansion joint bellows seal 64, which forms a pressure tight junction between the vessel 30 and conduit 36.

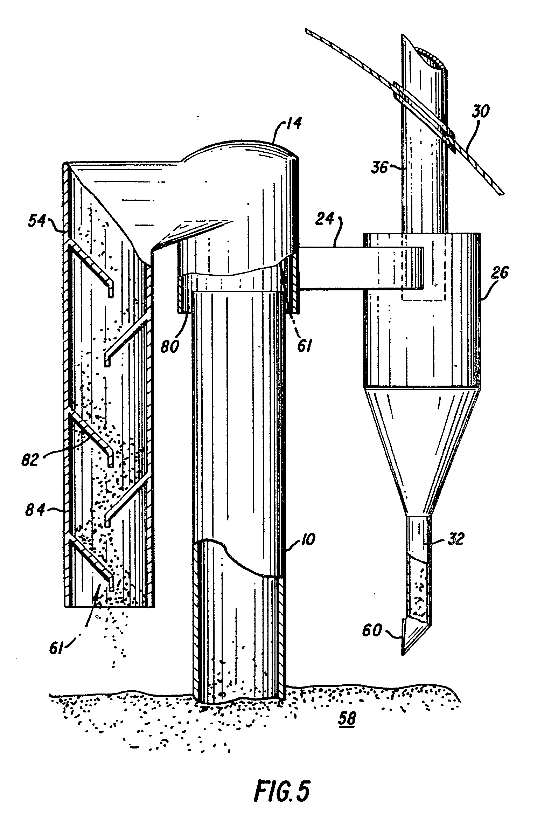

Fig. 3 is a top view of the embodiment shown in Fig. 2. Two riser cyclones 26 and two catalyst conduits 54 are connected to riser 10, resulting in an extremely compact structure located inside vessel 30. Any number of cyclones and/or catalyst conduits could be used, depending upon the flow requirements, the size of the reactor vessel, etc.

Fig. 2, shows inlets 66 which allow stripping steam and stripped hydrocarbons 61 into the upper end of the riser if stream 61 cannot be made to flow up the catalyst conduit 54.

A different manner of accommodating thermal expansion is shown in Fig. 4. Cyclone exhaust conduit 36 penetrates exhaust conduit 70 which is sealed to vessel 30. Conduit 36 and conduit 70 overlap and define an annulus through which stream 61 can pass. Expansion of the riser is taken up by movement of conduit 36 in conduit 70. Pressure in cyclone 26 should be higher than that in vessel 30. This higher pressure requirement requires that the cyclone 26 have a dipleg extension 72 which extends downwardly into the dense bed 58, preventing catalyst in the lower portion of the cyclone from being blown out of the trickle valve 60 used in the Fig. 2 embodiment.

The cyclone separator and catalyst conduit may also be supported from the reactor vessel, as shown in Fig. 5. The Fig. 5 operation is similar to that shown in Fig. 2, except that between the end cap 14 and riser 10 an annular gap 80 is created. The cyclone effluent exhaust conduit 36 is fixably attached to the reactor vessel 30. There may be other supporting braces, etc., between the atalyst conduit 54, riser end cap 14 and/or riser cyclone 26 and vessel 30. Riser 10 can expand or contract in annular gap 80.

In the Fig. 5 embodiment, the lower portion of catalyst conduit 54 has baffles 82 to form a dilute phase stripper 84. Stripping steam may be supplied at the lower end of stripper 84. A mixture of stripping steam and stripped hydrocarbons 61 may come from dense bed 58, and pass through perforations in baffles 82 in a direction opposite to catalyst flow. Stream 61 can enter the annular gap 80 and exit via cyclone inlet 24. As in Fig. 2, the cyclone pressure is below that vessel 30. There is no need to have a dipleg extension, a simple trickle valve 60 on cyclone dipleg 32 is sufficient to maintain the catalyst seal.

In Figs. 2–5, separation of catalyst from cracked hydrocarbons occurs because of a flow direction change in the vertical plane, i.e., the catalyst, by means of inertial forces goes up, while the suction of cyclone intake inlet 24 causes the hydrocarbons to bend 90°, in the preferred embodiments shown, to a horizontal direction. The vertical direction, in which catalyst continues, and the horizontal direction, comprising the hydrocarbon flow at inlet 24 are both located in a plane which is vertical. These separators are vertical plane direction changing separators.

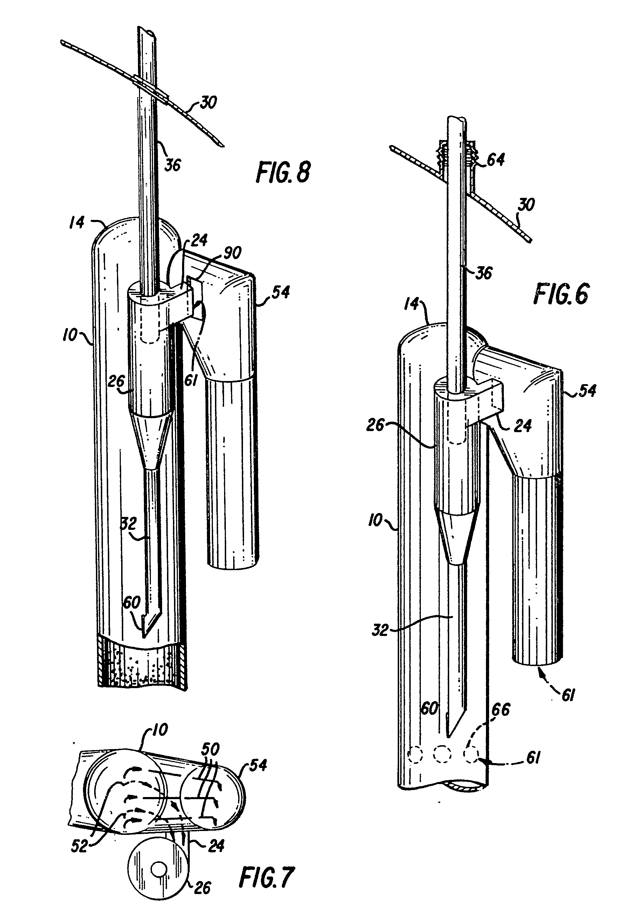

It may be desirable to use horizontal plane separation. Such a separator is shown in Fig. 6. Riser 10 and end cap 14 operate as in the previous systems. However, upon reaching cap 14, the mixture of cracked hydrocarbons and catalyst turns 90° and travels horizontally to conduit 54. The catalyst particles, by way of inertia, continue traveling into and down catalyst conduit 54. Cyclone 26 has an inlet 24, which has a flow direction at a substantial angle – 60 to 120°, preferably 75 to 105°, and ideally 90°. The cracked hydrocarbons flow into inlet 24 of cyclone 26, wherein any entrained catalyst is separated and passed down dipleg 32 through trickle valve 60 to dense bed 58 below. Cracked hydrocarbons pass up through cyclone exhaust 36 to additional separators or to a quenching and/or fractionation. The flow change can be seen in Fig. 7. Catalyst flow is shown by solid line arrows 50 and hydrocarbon flow is shown by dotted line arrows 52. As in Fig. 2, cyclone 26 and conduit 54 are supported by riser 10. Differences in thermal expansion between riser 10 and vessel 30 are accommodated by expansion joint belows seal 64.

As in Fig. 2, stripping steam and stripped hydrocarbons 61 may exit via apertures 66 or up through catalyst conduit 54.

Differences in thermal expansion could also be accommodated as shown in Fig. 4, with an annular space around the cyclone exhaust 36. This requires that the cyclone pressure be slightly greater than the vessel pressure, and necessitates a dipleg extension 72 extending into dense bed 58, as shown in Fig. 4.

In Figs. 6 and 7 a horizontal separation system supported from the riser is shown. The separator could also be supported from the vessel 30, as discussed Fig. 5, but with horizontal instead of vertical separation. This is illustrated in Fig. 8. The cyclone is supported from the vessel 30. The catalyst conduit 54 is supported from the riser 10. To accommodate differences in thermal expansion, the cyclone inlet 24 is not physically connected to conduit 54. Inlet 24 is disposed immediately adjacent aperture 90 in the catalyst conduit wall. Differences in thermal expansion are permitted by the separation between the structures. Because of the close proximity of cyclone inlet 24 to aperture 90, the beneficial aspects of a «closed cyclone» system are maintained since virtually all vapor in the vicinity of inlet 24 is sucked into the riser cyclone separator 26. In this embodiment, stripping steam, and stripped hydrocarbons exit via inlet 24.

Providing either vertical or horizontal separation between catalyst flow and hydrocarbon flow can reduce the mass rate of flow into the riser cyclone separator, reducing its size requirements and allowing a more compact separator system. Flow velocities can be increased substantially, resulting in an even smaller size and greater efficiencies for a given hydrocarbon flow through the cyclones. Stripping gas may be supplied as a by-product of a dense bed catalyst stripper located below the catalyst conduit and the cyclone trickle valve, or may be independently supplied to the catalyst conduit (in Figs. 2 and 6), to the riser (in Figs. 2, 5 and 6), to the inlet of the riser cyclone (in Fig. 8), and/or to the effluent exhaust outlet of the cyclone separator (in Fig. 4). Baffles may be added to the catalyst conduit, which baffles may include perforations to facilitate the passage of stripping steam therethrough during the operation of a dilute phase stripper, as in Fig. 5.

## Claims

1. A process for fluidized catalytic cracking of a hydrocarbon feed by passing a fluidized mixture of feed and a catalyst up through a riser reactor (10) within a vessel (30) and cracking the feed in the riser, wherein cracked products are produced and discharged from the riser, separated from catalyst in a cyclone and cracked products are removed from the vessel, characterized by passing the mixture of cracked hydrocarbons and catalyst adjacent at least one riser cyclone inlet (24), located in the riser (10), towards an inlet of at least one elongated catalyst conduit (54), the cyclone inlet (24) flow and the catalyst conduit inlet flows making angles with respect to flow in the riser (10); recovering a minor portion of catalyst from cracked product in the riser cyclone (26) and passing a major portion of catalyst and a minor portion of cracked product through the catalyst conduit (54).

2. The process of Claim 1, wherein two cyclones (26) and two catalyst conduits (54) in parallel are used.

3. Process of Claim 1 or 2, wherein recovered catalyst is collected in a lower portion of the vessel (30) and is stripped of strippable hydrocarbons in a stripping zone; and stripped catalyst is sent to a catalyst regenerator.

4. Process of any preceeding claim, wherein the riser reactor (10) includes openings for a stripping stream and strippable hydrocarbons.

5. Process of any preceding claim wherein the catalyst conduit includes a dilute phase stripper for passing a stripping stream countercurrently with respect to catalyst traveling through the catalyst conduit.

6. Process of any preceeding claim, wherein the riser reactor (10) supports the catalyst conduit and the riser cyclone (26), and the riser cyclone (26) has an exhaust conduit which passes through the vessel (30) via an expansion joint bellows seal external to the vessel, to remove cracked product from the vessel.

7. The process of any preceeding claim, wherein the riser cyclone (26) has an exhaust conduit terminating in an open end and a vessel exhaust conduit is provided which is spaced therefrom, the spacing between the cyclone exhaust conduit and the vessel (30) exhaust conduit defining an annular port, where the reactor vessel (30) exhaust conduit overlaps the effluent exhaust conduit.

8. The process of any preceeding claim, wherein the riser reactor (10) has a first conduit inserted into and spaced from a second conduit having a larger diameter than the first conduit, the spacing defining an annular gap, the riser cyclone (26) is connectively engaged with the second conduit and the catalyst conduit communicates with the second conduit and the cyclone is hung from the vessel (30).

9. The process of any preceeding claim wherein the mixture flows horizontally past the riser cyclone inlet (24).

10. Process of any of Claims 1 to 8 wherein the mixture flows vertically up past the riser cyclone inlet (24).

11. The process of any of Claims 1 to 8 wherein the mixture flows vertically down past the riser cyclone inlet (24).

12. An apparatus for fluid catalytic cracking of a hydrocarbon feed, comprising: a vessel (30) containing at least a portion of a riser reactor (10) formed as a vertically disposed elongated tubular conduit having an upstream end and a downstream end (14), the downstream end terminating within vessel (30); a hydrocarbon feed and catalyst inlet at the upstream end of the riser reactor (10) to produce a mixture of catalyst and cracked hydrocarbon feed traveling towards the downstream end (14) of the riser reactor; a catalyst conduit (54), having an inlet communicating with the downstream end of the riser reactor and an outlet (61) communicating with the vessel (30); a riser cyclone separator (26), having an inlet (24) adjacent the catalyst conduit inlet, an effluent exhaust (36) and a catalyst exhaust (32), the inlet (24) in fluid communication with the catalyst conduit (54); a conduit connective with the cyclone exhaust and extending out of the reactor vessel (30); and a conduit connective with the catalyst exhaust and the reactor vessel.

**Patentansprüche**

1. Verfahren zum katalytischen Wirbelschicht-Cracken einer Kohlenwasserstoffzufuhr, in dem eine fluidisierte Mischung einer Zufuhr und eines Katalysators nach oben durch einen Riserreaktor (10) innerhalb eines Gefässes (30) geleitet wird und diese Zufuhr im Riser gecrackt wird, wobei die gecrackten Produkte erzeugt und aus dem Riser abgegeben werden in einem Zyklon vom Katalysator abgetrennt werden und die gecrackten Produkte aus dem Gefäss entfernt werden, gekennzeichnet durch Leiten der Mischung der gecrackten Kohlenwasserstoffe und des Katalysators in die Umgebung von zumindest einem Einlass (24) des Riserzyklons, der im Riser (10) angeordnet ist, in Richtung des Einlasses von zumindest einer verlängerten Katalysatorleitung (54), wobei die Strömung des Zykloneinlasses (24) und die Strömungen des Einlasses der Katalysatorleitung in Bezug auf die Strömung im Riser (10) Winkel bilden, Rückgewinnung eines geringen Teils des Katalysators vom gecrackten Produkt im Riserzyklon (26) und Leiten eines Hauptteiles des Katalysators und eines geringen Teiles des gecrackten Produktes durch die Katalysatorleitung (54).

2. Verfahren nach Anspruch 1, worin zwei Zyklone (26) und zwei Katalysatorleitungen (54) parallel verwendet werden.

3. Verfahren nach Anspruch 1 oder 2, worin der zurückgewonnene Katalysator in einem unteren Abschnitt des Gefässes (30) aufgefangen wird und in einer Abstreifzone von den abstreifbaren Kohlenwasserstoffen abgestreift wird und der abgestreifte Katalysator einem Katalysatorregenerator zugeführt wird.

4. Verfahren nach einem der vorstehenden Ansprüche, worin der Riserreaktor (10) Öffnungen für den Abstreifstrom und die absteifbaren Kohlenwasserstoffe umfasst.

5. Verfahren nach einem der vorstehenden Ansprüche, worin die Katalysatorleitung einen Abstreifer für die verdünnte Phase umfasst, um einen Abstreifstrom in Bezug auf den sich durch Katalysatorleitung bewegenden Katalysator im Gegenstrom zu leiten.

6. Verfahren nach einem der vorstehenden Ansprüche, worin der Riserreaktor (10) die Katalysatorleitung und den Riserzyklon (26) trägt und der Riserzyklon (26) eine Entleerungsleitung aufweist, die über einen Ausgleichrohrverbindungsabschluss ausserhalb des Gefässes durch das Gefäss (30) führt, um das gecrackte Produkt aus dem Gefäss zu entfernen.

7. Verfahren nach einem der vorstehenden Ansprüche, worin der Riserzyklon (26) eine Entleerungsleitung aufweist, die in einem offenen Ende endet und eine Gefässentleerungsleitung vorgesehen ist, die davon räumlich getrennt ist, wobei der Abstand zwischen der Zyklonentleerungsleitung und der Entleerungsleitung des Gefässes (30) eine ringförmige Öffnung definiert, wobei die Entleerungsleitung des Reaktorgefässes (30) die Entleerungsleitung des Abflusses überlappt.

8. Verfahren nach einem der vorstehenden Ansprüche, worin der Riserreaktor (10) eine erste Leitung aufweist, die in die zweite Leitung eingesetzt ist und davon räumlich getrennt ist, die einen grösseren Durchmesser als die erste Leitung aufweist, wobei dieser Abstand einen ringförmigen Spalt definiert, der Riserzyklon (26) verbindend mit der zweiten Leitung eingreift und die Katalysatorleitung mit der zweiten Leitung in Verbindung steht und der Zyklon am Gefäss (30) hängt.

9. Verfahren nach einem der vorstehenden Ansprüche, worin die Mischung horizontal über den Riserzykloneinlass (24) strömt.

10. Verfahren nach einem der Ansprüche 1 bis 8, worin die Mischung über den Riserzykloneinlass (24) vertikal nach oben strömt.

11. Verfahren nach einem der Ansprüche 1 bis 8, worin die Mischung über den Riserzykloneinlass (24) vertikal nach unten strömt.

12. Vorrichtung zum katalytischen Wirbelschicht-Cracken einer Kohlenwasserstoffzufuhr, welche umfasst: ein Gefäss (30), das zumindest einen Teil eines Riserreaktors (10) enthält, der als vertikal angeordnete, verlängerte, rohrförmige Leitung mit einem stromabwärtigen und einem stromaufwärtigen Ende (14) gebildet ist, wobei das stromabwärtige Ende innerhalb des Gefässes (30) endet, einen Einlass für die Kohlenwasserstoffzufuhr und den Katalysator am stromaufwärtigen Ende des Riserreaktors (10), um eine Mischung des Katalysators und der gecrackten Kohlenwasserstoffzufuhr zu erzeugen, die sich in Richtung des stromabwärtigen Endes (14) des Riserreaktors bewegt, eine Katalysatorleitung (54) mit einem Einlass, der mit dem stromabwärtigen Ende des Riserreaktors in Verbindung steht und einem Auslass (61), der mit dem Gefäss (30) in Verbindung steht, einen Riserzyklonseparator (26) mit einem Einlass (24) neben dem Einlass der Katalysatorleitung, einer Abflussentleerung (36) und einer Katalysatorentleerung (32), wobei der Einlass (24) mit der Katalysatorleitung (54) in Fluidverbindung steht, eine Leitung, die mit der Zyklonentleerung verbindet und sich aus dem Reaktorgefäss (30) erstreckt, und eine Leitung, die mit der Katalysatorentleerung und Reaktorgefäss verbindet.

**Revendications**

1. Un procédé de craquage catalytique fluidisé d'une charge d'hydrocarbures dans lequel on fait passer un mélange fluidisé de charges et de catalyseur à travers un réacteur (10) ascendant, situé dans une enceinte (30) et on craque la charge dans le réacteur ascendant, on obtient des produits craqués et on les fait sortir du réacteur ascendant, on les sépare du catalyseur dans un cyclone et les produits craqués sont éliminés de l'enceinte, caractérisé en ce que l'on fait passer le mélange d'hydrocarbures et de catalyseur vers au moins une entrée (24) de cyclone ascendant disposée dans le réacteur ascendant (10) vers une entrée d'au moins un conduit allongé (54), l'écoulement dans l'entrée (24) du cyclone et l'écoulement dans l'entrée du conduit de catalyseur faisant un certain angle par rapport à l'écoulement dans le réacteur ascendant (10); on récupère une portion mineure du catalyseur séparé du produit craqué dans le cyclone (26) ascendant; et on fait passer une portion majeure du catalyseur et une portion mineure du produit craqué à travers le conduit (54) du catalyseur.

2. Le procédé selon la revendication 1, dans lequel on utilise deux cyclones (26) et deux conduits (54) de catalyseur en parallèle.

3. Le procédé selon la revendication 1 ou 2, dans lequel on recueille du catalyseur récupéré dans une portion inférieure de l'enceinte (30) et le débarrasse de ces hydrocarbures susceptibles d'être extraits dans une zone d'extraction; et le catalyseur ayant subi l'extraction est envoyé dans une installation de régénération du catalyseur.

4. Procédé selon l'une quelconque des revendications précédentes, dans lequel le réacteur (10) ascendant comprend des orifices d'introduction d'un courant d'extraction et d'hydrocarbures susceptibles d'être extraits.

5. Procédé selon l'une quelconque des revendications précédentes, dans lequel le produit de catalyseur comprend une zone d'extraction en phase diluée pour faire passer un courant d'extraction à contre-courant du catalyseur se déplaçant à travers ce conduit de catalyseur.

6. Procédé selon l'une quelconque des revendications précédentes, dans lequel le réacteur ascendant (10) supporte les conduits de catalyseur et le cyclone ascendant (26), et le cyclone ascendant (26) comporte un conduit d'évacuation passant à travers l'enceinte (30) à l'aide d'un joint à soufflets d'expansion extérieur à l'enceinte pour faire sortir les produits craqués de l'enceinte.

7. Le procédé selon l'une quelconque des revendications précédentes, dans lequel le cyclone ascendant (26) présente un conduit d'évacuation se terminant par une extrémité ouverte et un conduit d'évacuation de l'enceinte qui en est espacé, l'espacement entre le conduit d'évacuation du cyclon et le conduit d'évacuation de l'enceinte (30) définissant un orifice annulaire, le conduit d'évacuation de l'enceinte (30) du réacteur recouvrant le conduit d'évacuation de l'effluent.

8. Le procédé selon l'une quelconque des revendications précédentes, dans lequel le réacteur ascendant (10) présente un premier conduit inséré dans un deuxième conduit et espacé de celui-ci présentant un diamètre plus important que le premier conduit, cet espacement définissant un espace libre annulaire, le cyclone ascendant (26) étant connecté au deuxième conduit, le conduit de catalyseur communiquant avec le deuxième conduit et le cyclone étant suspendu à l'enceinte (30).

9. Le procédé selon l'une quelconque des revendications précédentes, dans lequel le mélange s'écoule en direction horizontale après entrée (24) dans le cyclone ascendant.

10. Le procédé selon l'une quelconque des revendications 1 à 8, dans lequel le mélange s'écoule verticalement après entrée (24) dans le cyclone ascendant.

11. Le procédé selon l'une quelconque des revendications 1 à 8, dans lequel le mélange descend verticalement après entrée (24) dans le cyclone ascendant.

12. Un dispositif de craquage catalytique fluidisé d'une charge d'hydrocarbures comprenant une enceinte (30) contenant au moins une partie d'un réacteur (10) ascendant ayant la forme d'un conduit tubulaire allongé disposé verticalement, présentant une extrémité amont et une extrémité aval (14), l'extrémité aval se terminant à l'intérieur de l'enceinte (30); une entrée de charge d'hydrocarbures et de catalyseur à l'extrémité amont du réacteur (10) ascendant pour réaliser un mélange de catalyseur et de charge d'hydrocarbures craqués se déplaçant vers l'extrémité aval (14) du réacteur ascendant; un conduit de catalyseur (54) dont une entrée communique avec l'extrémité aval du réacteur ascendant et comportant une sortie (61) qui communique avec l'intérieur de l'enceinte (30); un séparateur (26) à cyclone ascendant dont l'entrée (24) est adjacente à l'entrée du conduit de catalyseur, comportant un conduit d'évacuation d'effluent (36) et un conduit (32) d'évacuation du catalyseur, l'orifice d'entrée (24) étant en communication fluide avec le conduit (54) du catalyseur; un conduit rattaché au conduit d'évacuation du cyclone et s'étendant hors de l'enceinte (30) du réacteur; et un conduit rattaché au conduit d'échappement du catalyseur et à l'enceinte du réacteur.

0 181 095

FIG. I

(PRIOR ART)

STM

STM

HYC+CAT

FIG. 3

FIG.4

9

FIG. 2

FIG.5

FIG.8

FIG.6

FIG.7